Europäisches Patentamt

European Patent Office

Office européen des brevets

(19)

(11) Numéro de publication: **0 180 504**
**B1**

(12) **FASCICULE DE BREVET EUROPEEN**

(45) Date de publication du fascicule du brevet:
**07.12.88**

(51) Int. Cl.⁴: **F 41 B 11/10, F 16 K 1/36**

(21) Numéro de dépôt: **85401983.3**

(22) Date de dépôt: **11.10.85**

(54) **Valve d'étanchéité pour circuit pneumatique ou hydraulique.**

(30) Priorité: **11.10.84 FR 8415580**

(43) Date de publication de la demande:
**07.05.86 Bulletin 86/19**

(45) Mention de la délivrance du brevet:
**07.12.88 Bulletin 88/49**

(84) Etats contractants désignés:
**AT BE CH DE FR GB IT LI**

(56) Documents cités:
**CH-A- 377 685**
**FR-A- 1 113 966**
**FR-A- 1 203 207**
**GB-A- 1 600 138**
**US-A- 3 527 194**
**US-A- 3 741 189**

(73) Titulaire: **ETAT-FRANCAIS représenté par le DELEGUE GENERAL POUR L'ARMEMENT (DPAG), Bureau des Brevets et Inventions de la Délégation Générale pour l'Armement 26, Boulevard Victor, F-75996 Paris Armées (FR)**

(72) Inventeur: **Lacam, Jean, 16, rue Jean Moulin, F-42100 Terrenoire (FR)**
Inventeur: **Pons, René, 138, rue des Alliés, F-42100 Saint Etienne (FR)**
Inventeur: **Simand, Pierre, Outre L'Eau, F-42680 Saint Marcellin en Forez (FR)**

## Description

Le secteur technique de la présente invention est celui des valves d'étanchéité permettant de libérer ou d'interdire le passage d'un fluide comprimé dans un circuit pneumatique ou hydraulique.

Pour autoriser ou interdire le passage d'un fluide d'une réserve vers un circuit de distribution ou d'utilisation il est connu d'utiliser des valves constituées d'un corps, d'une tige monobloc et d'un joint d'étanchéité. La tige est soumise à l'action axiale d'un moyen de translation et le corps aux actions antagonistes d'un moyen de rappel élastique ou du fluide sous pression. Ainsi, le brevet FR-A-1 113 966 décrit une valve d'étanchéité appliquée à une arme à air comprimé, munie d'un joint placé sur la tige et comprimé entre une butée et le corps de valve. L'inconvénient de ce genre de dispositif réside dans le fait que le joint est mobile à la fois par rapport à la butée et par rapport au corps, ce qui provoque son usure prématurée. De plus, le remplacement de ce joint nécessite le démontage complet de l'ensemble support de la valve puisque le corps et la tige de la valve sont inséparables.

Les brevets US-A-3 527 194 et 3 741 189 décrivent une arme à air comprimé dont la valve est constituée d'un corps, d'une tige et d'un joint. La tige reçoit la percussion du marteau, mais elle n'est pas en butée sur le corps. Il en résulte que le joint est soumis à la fois aux forces de compression du percuteur et de compression d'un ressort de rappel et du fluide comprimé, entraînant une usure prématurée du joint.

Le brevet FR-A-1 203 207 décrit selon le préambule de la revendication 1 une valve d'étanchéité pour un circuit pneumatique ou hydraulique, mobile à l'intérieur d'un cylindre d'admission de fluide. Cette valve comporte un corps recevant dans un alésage axial une tige, un joint étant interposé entre la tige et le corps. Toutefois, aucune précision n'est apportée sur le montage de ce joint dans un alésage du corps.

Le but de la présente invention est de fournir une valve dans laquelle les forces de compression appliquées au joint d'étanchéité sont réduites.

L'invention a donc pour objet une valve d'étanchéité pour circuit pneumatique ou hydraulique mobile à l'intérieur d'un cylindre d'admission du fluide, du type comportant un corps muni d'un alésage axiale recevant une tige, un joint étant interposé entre la tige et le corps dans un alésage pour coopérer avec une butée du cylindre d'admission, caractérisée en ce que le joint est comprimé au montage dans un alésage conique à la fois axialement et radialement, la compression axiale étant réalisée à l'aide de l'épaulement de la tige et d'un renflement annulaire convexe pratiqué dans le fond de l'alésage, et la compression radiale étant obtenue par la différence de diamètre entre d'une part le diamètre interne de l'alésage et le diamètre externe du joint et d'autre part entre le diamètre interne du percement du joint et le diamètre de la partie arrière de la tige.

La compression longitudinale du joint peut être réalisée lorsque la partie arrière de la tige est en butée sur l'épaulement.

Appliquée au tir de projectiles à l'aide d'un appareil de tir semi-automatique à gaz comprimé, la valve est mobile entre deux butées, le corps s'appliquant sur une première butée après le choc d'un percuteur et le joint s'appliquant en retour sur une deuxième butée pour assurer l'étanchéité par action de la pression de gaz.

Le corps de valve peut être soumis à la pression de gaz provenant d'une réserve par l'intermédiaire d'une chambre.

Un avantage de la présente invention réside dans le fait que la durée de vie du joint est prolongée, puisque celui-ci ne subit aucune contrainte lors du choc du percuteur; on évite des opérations fréquentes de démontage de l'arme pour remplacer ce joint, ce qui est incompatible avec une utilisation intensive sur un stand de tir.

Un autre avantage de la présente invention réside dans le fait que la position de la tige est fixe par rapport au corps, quelle que soit la force de percussion sur la tige. Cette position est invariable au cours du temps et il en résulte que l'extrémité libre de la tige est toujours située à une distance invariable par rapport au siège de valve. La fiabilité de l'arme et ses performances sont donc conservées quelle que soit l'utilisation de l'arme.

Un autre avantage réside dans l'absence de sertissage du joint puisque celui-ci est soumis à une compression radiale et axiale dans son logement.

Un autre avantage encore réside dans l'interchangeabilité des éléments constitutifs de la valve.

D'autres avantages de l'invention seront mieux compris à la lumière du complément de description qui va suivre d'un mode de réalisation donné à titre d'exemple en relation avec un dessin dans lequel:

— la figure 1 représente une coupe des trois éléments constituant la valve,

— la figure 2 montre l'assemblage de ces trois éléments,

— la figure 3 représente une adaptation particulière de la valve dans une arme à air comprimé.

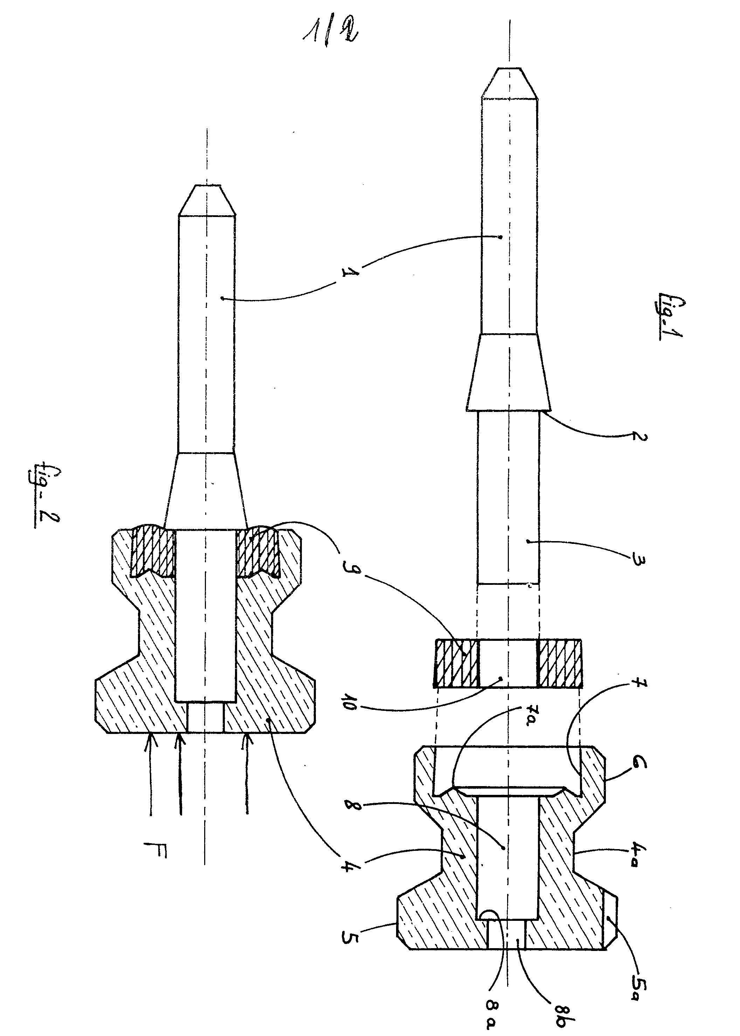

Sur la fig. 1, on a représenté une tige 1 comportant un épaulement 2 et une partie arrière 3 cylindrique. Le corps 4 est muni de deux portées cylindriques 5 et 6 séparées par une nervure annulaire 4a. La portée cylindrique 5 comprend des ouvertures 5a destinées au passage du fluide comprimé. Le diamètre de la portée 5 correspond au diamètre interne du logement dans lequel la valve est montée de telle façon que cette valve soit mobile sous l'action du fluide comprimé agissant sur le corps de valve. La portée 5 est préférentiellement d'un diamètre supérieur à celui de la portée 6. Le corps 4 comprend un premier alésage conique 7 prolongé par un second alésage cylindrique 8 et à fond plat 8a et éventuellement par un troisième 8b. Le diamètre de l'alésage 8 est prévu de façon à assurer le maintien et le blocage de la partie 3 de la tige, afin d'obtenir une solidarisation du corps et de la tige par simple serrage diamétral. L'alésage 7 présente un fond muni d'un renflement 7a annulaire convexe et reçoit un joint annulaire 9 comportant un percement axial 10. Sur la figure, on voit que la grande base de l'alésage conique 7 est située vers l'intérieur du corps de valve tandis que la petite base débouche sur l'extérieur. Le diamètre externe du joint 9 est légèrement supérieur à celui de l'alésage 7 de façon à provoquer une compression radiale du joint lors de sa mise en place. D'autre part, le diamètre du percement 10 du joint est légèrement inférieur au diamètre de la partie arrière 3 de la tige, ce qui permet d'obtenir une autre compression radiale du joint par la tige. A titre d'exemple, le corps 4 peut être réalisé en laiton et la tige 1 en acier traité. Le joint 9 peut être réalisé par exemple à partir d'un élastomère ou toute autre matière de caractéristiques voisines.

Sur la fig. 2, on a réuni la tige 1, le joint 9 et le corps 4 pour constituer la valve. Bien entendu, le joint est d'abord placé dans l'alésage 7 puis on introduit la tige. La partie arrière 3 de la tige est en butée sur le fond plat 8a et l'épaulement 2 réalise une légère compression axiale du joint 9. Si le remplacement du joint doit être effectué, la tige 1 peut être séparée du corps 4 puisqu'il n'y a aucun sertissage du joint sur le corps, ce qui évite le remplacement complet de la valve. Le joint 9 est destiné à absorber les chocs en butée de la valve générés par la pression de gaz s'exerçant suivant la flèche F sur le corps 4. Sur la figure, on voit que la compression axiale et radiale du joint provoque un léger bombement de la surface libre de celui-ci. Ainsi, le serrage diamétral et la compression axiale du joint 9 entre le corps 4 et la tige 1 permettent de contrôler le gonflement radial et axial du joint.

On comprend donc que, lors des multiples percussions de la tige 1 par un marteau de percussion, le joint 9 n'est pas comprimé, les chocs étant alors intégralement transmis au corps de valve. L'usure du joint est donc considérablement réduite et on n'a constaté aucune détérioration du joint après plus de 50 000 utilisations. La position de l'extrémité libre de la tige ne variant pas au cours du temps, les performances de l'arme ne sont pas modifiées. En effet, on sait qu'une variation de position de cette extrémité de 0,4 mm dégrade considérablement les performances de l'arme, la pression d'éjection et d'étanchéité étant alors modifiées.

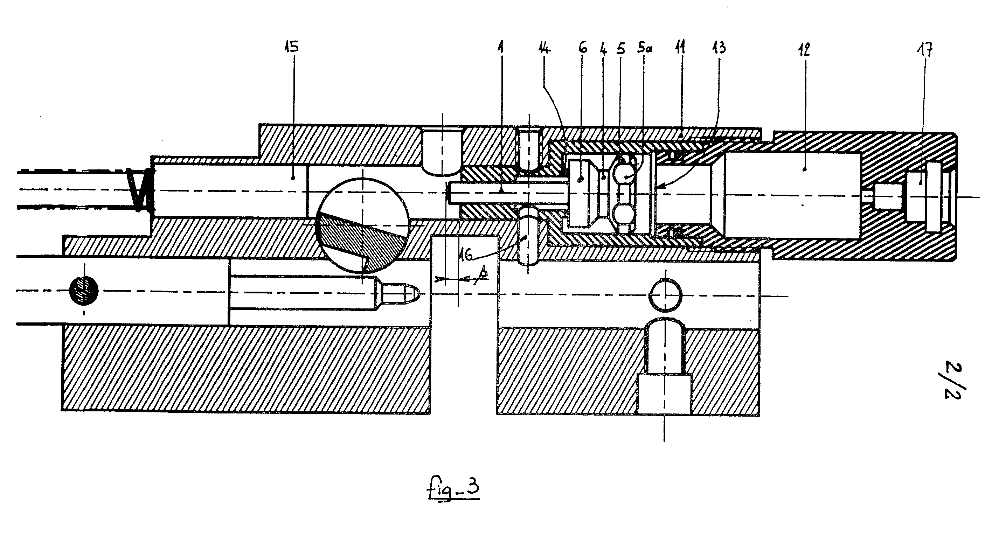

Sur la fig. 3, on a schématisé un exemple concret d'application de la valve dans un appareil de tir semiautomatique à gaz comprimé. Cet appareil va être décrit partiellement et pour plus de détails on pourra se référer au brevet français précité. L'appareil comprend notamment un boîtier 11, par exemple à sa partie supérieure, renfermant une chambre 12 en communication avec une réserve 17 de gaz comprimé, fermée par le corps de la valve. Le corps de valve est mobile entre les butées 13 et 14 dont l'écartement délimite la course de la valve. La butée 14 constitue le siège de valve. La tige 1 est soumise à l'action d'un percuteur 15 actionné de façon connue lors de la séquence de tir. Bien entendue, le boîtier 11 comprend un conduit 16 permettant de diriger le gaz comprimé dans un canon (non représenté) de lancement des projectiles. L'extrémité de la tige 1 est située à une distance s fixe du boîtier 11.

Le fonctionnement est le suivant: lorsque la tige est actionnée par le percuteur 15, le corps 4 vient rapidement au contact de la butée 13, ce qui provoque la circulation du gaz à travers les ouvertures 5a de la portée 5, le passage momentanément libre entre la portée 6 et la butée 14 et le conduit 16. Le choc du corps 4 contre la butée 13 provoque l'arrêt du mouvement d'ouverture de la valve et une inversion de sens, qui avec l'aide de la pression de fluide provoque la fermeture de la valve par application du joint 9 sur la butée 14 ou siège de valve. Le choc en retour est donc amorti, ce qui assure une étanchéité rapide, donc une consommation de gaz limitée à la quantité nécessaire pour assurer la propulsion désirée de projectile. On voit donc que lors de la percussion de la tige 1, le joint 9 n'est pas comprimé par l'épaulement 2 puisque le choc est absorbé par la coopération de la partie arrière 3 de la tige en butée sur le fond plat 8a et par le serrage diamétral entre la partie 3 et l'alésage 8. Il en résulte que ce joint n'est soumis qu'aux seuls chocs en retour sur la butée 13 et la distance s n'est pas modifiée. Enfin, le bombement vers l'extérieur du joint améliore l'étanchéité en favorisant la diminution de la consommation de gaz comprimé.

**Revendications**

1. Valve d'étanchéité pour circuit pneumatique ou hydraulique mobile à l'intérieur d'un cylindre d'admission du fluide, du type comportant un corps (4) muni d'un alésage (8) axial recevant une tige (1), un joint (9) étant interposé entre la tige et le corps dans un alésage (10) pour coopérer avec une butée (14) du cylindre d'admission, caractérisée en ce que le joint (9) est comprimé au montage dans un alésage conique (7) à la fois axialement et radialement, la compression axiale étant réalisée à l'aide de l'épaulement (2) de la tige (3) et d'un renflement annulaire convexe (7a) pratiqué dans le fond de l'alésage (7), et la compression radiale étant obtenue par la différence de diamètre entre d'une part le diamètre interne de l'alésage (7) et le diamètre externe du joint (5) et d'autre part entre la diamètre interne du percement (10) du joint et de diamètre de la partie arrière (3) de la tige.

2. Valve d'étanchéité selon la revendication 1, caractérisée en ce que la compression longitudinale du joint est réalisée lorsque la partie arrière (3) de la tige est en butée sur l'épaulement (8a).

3. Application d'une valve selon la revendication 1 ou 2, au tir de projectiles à l'aide d'un appareil de tir semiautomatique à gaz comprimé, dans lequel ladite valve est mobile entre deux butées (13, 14), le corps (4) s'appliquant sur une première butée (13) après le choc d'un percuteur et le joint (9) s'appliquant en retour sur la deuxième butée (14) pour assurer l'étanchéité par action de la pression de gaz.

4. Application selon la revendication 3, caractérisée en ce que le corps de valve est soumis à la pression de gaz par l'intermédiaire d'une chambre (12).

**Patentansprüche**

1. Sperrventil für pneumatischen oder hydraulischen Steuerkreis, im Innern eines Zylinders zum Einlass des Mediums beweglich angeordnet, bestehend aus einem Körper (4) mit einer Bohrung (8) zur Aufnahme einer Schaft (1), wobei eine Dichtung (9) zwischen der Schaft (1) und der Bohrung (7) eingefasst ist, um mit einem Anschlag (14) des Einlasszylinders mitzuwirken, dadurch gekennzeichnet, dass die Dichtung (9) beim Einbau in der kegelförmigen Bohrung (7) zugleich in Längs- und Querrichtung zusammengedrückt wird, wobei der axiale Druck über den Ansatz (2) der Schaftverlängerung (3) und eine auf dem Boden der Bohrung (7) gedrehte bauchige Ringswulst (7a) erfolgt und der radiale Druck aus dem Unterschied zwischen dem inneren Durchmesser der Bohrung (7) und dem äusseren Durchmesser der Dichtung (5) einerseits sowie zwischen dem Inneren Durchmesser des Dichtungsloches (10) und dem äusseren Durchmesser der Schaftverlängerung (3) andererseits entsteht.

2. Sperrventil nach Anspruch 1, dadurch gekennzeichnet, dass die Längszusammenpressung der Dichtung erzielt wird, wenn die Schaftverlängerung (3) gegen den Ansatz (8a) anschlägt.

3. Anwendung eines Sperrventils, nach einem beliebigen Anspruch 1 oder 2, dem Abschuss von Geschossen mittels eines halbautomatischen Druckgas-Schiessgerätes, in welchem das erfindungsgemässe Sperrventil sich zwischen zwei Anschlägen (13, 14) bewegt, wobei sich der Körper (4) gegen einen ersten Anschlag (13) nach dem Aufprall eines Schlagbolzens (15) gedrückt wird und wobei die Dichtung (9) während der Rückbewegung unter Einwirkung des Gasdruckes gegen den zweiten Anschlag (14) zum Abdichten des Durchlasses gedrängt wird.

4. Anwendung nach Anspruch 3, dadurch gekennzeichnet, dass der Ventilkörper mit dem Druck des Treibgases über die Druckkammer (12) beaufschlagt wird.

**Claims**

1. A sealing valve for a pneumatic or hydraulic circuit movable inside a fluid-inlet cylinder, of the type comprising a body (4) with an axial bore (8) housing a rod (1), a joint (9) being interposed between the rod and the body in a bore (10) in order to co-operate with a stop (14) of the inlet cylinder, characterized in that the joint (9) has been compressed when assembled in a cone-shaped bore (7) both axially and radially, the axial compression being obtained by means of the shoulder (2) of the rod (3) and a convex annular swelling (7a) machined in the bottom of the bore (7), and the radial compression being obtained by the diameter difference between the inner diameter of the bore (7) and the outer diameter of the joint (5), on the one hand, and between the inner diameter of the joint hole (10) and the diameter of the rear portion (3) of the rod, on the other hand.

2. A sealing valve according to claim 1, characterized in that the longitudinal compression of the joint is obtained when the rear portion (3) of the rod abuts against the shoulder (8a).

3. An application of a valve according to claim 1 or 2, to the firing of projectiles by means a semiautomatic, compressed gas operated firing device in which the said valve is movable between two stops (13, 14), the body (4) resting on a first stop (13) after the impact of a firing pin and the joint (9) resting in return on the second stop (14) so as to ensure sealing under the gas pressure.

4. An application according to claim 3, characterized in that the valve body is subjected to the gas pressure through a chamber (12).

Fig.1

Fig.2

2/2

Fig. 3